# EUROPÄISCHE PATENTSCHRIFT

(11) **EP 0 414 126 B1**
(45) Veröffentlichungstag und Bekanntmachung des Hinweises auf die Patenterteilung: **05.01.1994**
(21) Anmeldenummer: 90115684.4
(22) Anmeldetag: 16.08.1990
(51) Int. Cl.: B01D 19/00, B01D 1/00

(54) **Entgasungsvorrichtung**
Deaerating apparatus
Dispositif de dégazage

(30) Priorität: 24.08.1989 CH 3078/89
(43) Veröffentlichungstag der Anmeldung: 27.02.1991
(73) Patentinhaber: MICAFIL AG, CH-8048 Zürich (CH)
(72) Erfinder: Gmeiner, Paul, CH-8966 Lieli (CH)
(74) Vertreter: Kaiser, Helmut, Dr.

(56) Entgegenhaltungen:
- FR-A- 1 204 589
- FR-A- 2 207 742
- FR-A- 2 211 268
- GB-A- 15 263
- SOVIET INVENTIONS ILLUSTRATED, Woche 8634, 5. September 1986, Zusammenfassung Nr.86-224568/34, J01, Derwent Publications Ltd, London, GB; & SU-A-1205 927 (TRANSFORMERS RES.) 23-01-1986

## Beschreibung

Die Erfindung betrifft eine Vorrichtung zur Entgasung und Entwässerung von ölartigen und ölhaltigen Flüssigkeiten gemäss den Oberbegriffen der Patentansprüche 1 und 6.

Bei der Reinigung von neuen oder wenig gealterten ölartigen Flüssigkeiten werden in Filtern feste Verunreinigungen entfernt und das im Oel darin gelöste Wasser und Gase, vorzugsweise unter Vakuum, beseitigt. Die Vakuumentgasung wird in einem Kessel besonderer Auslegung durchgeführt, in welchem das Oel über eine grosse Oberfläche verteilt, beispielsweise in einer sogenannten Raschingring-Packung entgast und entwässert wird. Die Erwärmung des Oeles muss schonend erfolgen, um übermässige thermische Beanspruchung desselben zu vermeiden. In der Regel erfolgt die Vorwärmung des Oeles in einem separaten, ausserhalb des Entgasungskessels angeordneten Oelvorwärmer.

Um das Erwärmen des Oeles in einem ausserhalb des Entgasungskessels angeordneten Oelvorwärmer nicht vornehmen zu müssen, wurde gemäss der DE-A- 23 58 068 vorgeschlagen, die Heizeinrichtung direkt im Entgasungskessel anzuordnen, die einen flüssigkeitsdurchlässigen Heizkörper aus elektrischem Widerstandsmaterial, beispielsweise Kohle, Bariumtitanat, enthält, der am Einlass des Entgasungskessels angeordnet ist und durch welchen die zu behandelnde Flüssigkeit durchströmt und unmittelbar in das Kessel innere gelangt. An die beiden Heizkörperenden ist jeweils ein ringförmiger Anschluss für die elektrische Stromversorgung angeordnet.

Bei einer derartigen Vakuumentgasung kann die flüssigkeitsdurchlässige, schwammig poröse Masse des Heizkörpers bei geringsten Verunreinigungen verstopft werden, wodurch in diesem Bereich der Ölstrom unterbrochen und somit die Wärmeabfuhr nicht mehr gewährleistet ist. Der poröse Heizkörper wird überhitzt und dadurch das Öl thermisch überlastet. Ein derartiger Ölwärmer ist für eine Entgasung des Öls nicht geeignet.

In GB-A-15 263 ist eine Vorrichtung zum Verdampfen, Verflüchtigen oder Destillieren von Flüssigkeiten oder Feststoffen beschrieben. Diese Vorrichtung weist einen die Flüssigkeiten oder die Feststoffe aufnehmenden Behälter auf. Im Boden des Behälters sind Kanäle oder Nuten vorgesehen, welche mit nichtmetallenem Widerstandsmaterial, wie etwa granuliertem Kohlenstoff, gefüllt sind. Das Widerstandsmaterial ist in elektrisch leitender Weise mit einer Stromquelle verbunden. Bei Betrieb dieser Vorrichtung wird das Widerstandsmaterial elektrisch aufgeheizt und werden die umgebenden Flüssigkeiten oder Feststoffe verdampft. Hierbei wird das verdampfte Material hohen thermischen Belastungen ausgesetzt.

Der Erfindung, wie sie in den Patentansprüchen 1 und 6 definiert ist, liegt die Aufgabe zugrunde, ein Vorrichtung der eingangs genannten Art anzugeben, die ein schonendes Aufheizen und ein wirkungsvolles Entgasen von ölartigen und ölhaltigen Flüssigkeiten gewährleistet, wobei auch bei verunreinigten Flüssigkeiten eine thermische Zersetzung vermieden werden soll.

Der Vorteil der erfindungsgemässen Vorrichtung besteht insbesondere darin, dass in den mit je einer Packung gefüllten bzw.aufgeschütteten Aufheiz- und/oder Entgasungskolonnen gleichzeitig sowohl das Erwärmen als auch das Entgasen der Flüssigkeit erfolgen kann, so dass sich ein zusätzlicher, ausserhalb oder innerhalb des Entgasungskessels angeordneter Oelvorwärmer mit den erforderlichen Leitungen erübrigt.

Während der Entgasung des Oeles sinkt der Wirkungsgrad für den Luftentzug der Aufheiz-und/oder Entgasungskolonnen mit steigender Oeltemperatur, da dabei die Oberflächenspannung des Oeles reduziert und der Entzug von Luft aus der ölartigen oder ölhaltigen Flüssigkeit erschwert wird.

Da jeweils im oberen Teil der Aufheiz- und/oder Entgasungskolonne die Flüssigkeit nur leicht erwärmt wird, kann in vorteilhafter Weise der Wirkungsgrad inbezug auf den Luftentzug in diesem Bereich verbessert werden. Jeweils im unteren Bereich der Aufheiz- und/oder Entgasungskolonnen wird das Oel auf die gewünschte Temperatur erhöht, wodurch in diesem Bereich dann überwiegend der Wassergehalt auf die erforderlichen Werte abgesenkt wird, wodurch der Wirkungsgrad inbezug auf Wasserentzug in vorteilhafter Weise erhöht werden kann.

Durch Aufheizung und Entgasung und Entwässerung der Flüssigkeit in denselben Aufheiz- und/oder Entgasungskolonnen werden bei der erfindungsgemässen Vorrichtung wesentliche Platz- und Gewichtsersparnisse erzielt.

Da bei den mit Füllkörpersäulen versehenen Aufheiz- und/oder Entgasungskolonnen grosse Heizflächen- bzw. Entgasungsoberflächen gegeben sind, wird eine geringe Temperaturdifferenz zwischen Heizfläche und Flüssigkeit d.h. eine kleine thermische Belastung der Flüssigkeit gewährleistet, wobei gleichzeitig eine Verschmutzungsgefahr der Aufheiz- und/oder Entgasungskolonnen vermieden wird.

In der Zeichnung sind erfindungsgemässe Ausführungsbeispiele dargestellt.

Es zeigen
Fig.1 eine schematische Anordnung einer erfindungsgemässen Vorrichtung und
Fig.2, 3,4 und 5 je einen Querschnitt durch verschiedene Ausbildungen von Entgasungskesseln der Vorrichtung gemäss Fig.1

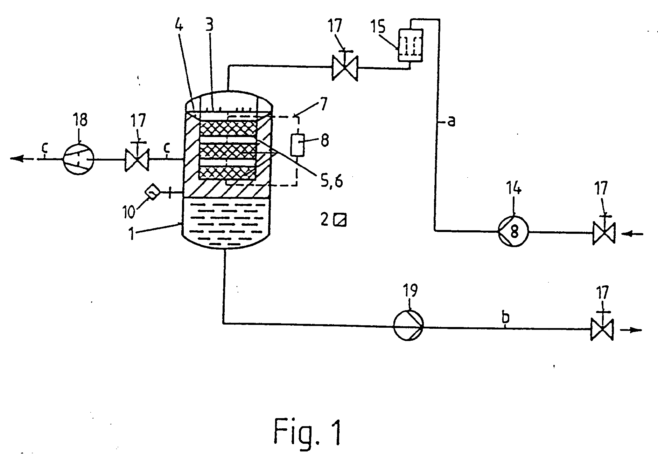

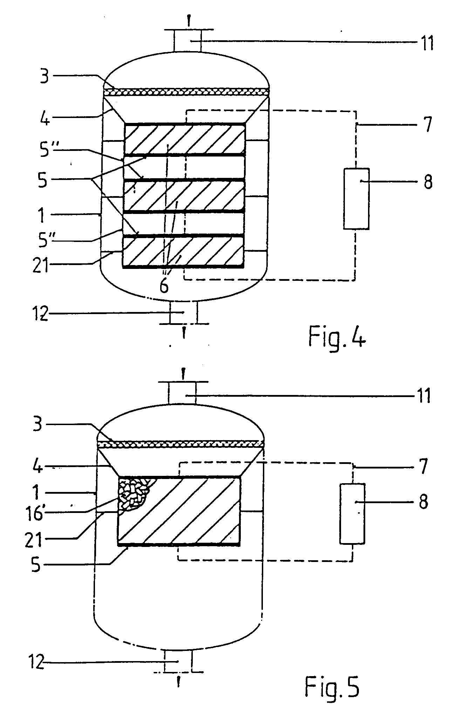

Gemäss Fig.1 ist eine Entgasungs- und Entwässerungs-Vorrichtung gezeigt, bei welcher die ölartige oder ölhaltige Flüssigkeit, vorzugsweise Isolieröl in Pfeilrichtung aus einem -nicht dargestellten- Vorratsbehälter oder beispielsweise einem Transformator über ein Sperrventil 17 über eine in einer Leitung -a- angeordnete Zahnradpumpe 14 geleitet wird. Von dort gelangt das Isolieröl durch die Leitung -a- über einen Filter 15, ein Sperrventil 17 in den Entgasungskessel 1. Der Entgasungskessel 1 wird durch eine Vakuumpumpe 18 über die Vakuumleitung -c- evakuiert Das durch die Kessel-Deckelmitte durch eine Einlassöffnung 11 einströmende Isolieröl verteilt sich in bekannter Weise über ein Verteilersystem 3 oder eine nicht dargestellte Sprühdüse und fällt bzw. fliesst über Leitelemente 4 nach unten in eine Entgasungskolonne 6, die beispielsweise aus drei horizontal übereinander angeordneten Teil-Füllkörpersäulen besteht (siehe auch Fig.4) und vorzugsweise aus sogenannten Raschingringen gebildet ist, über welche das Isolieröl hinwegrieselt.

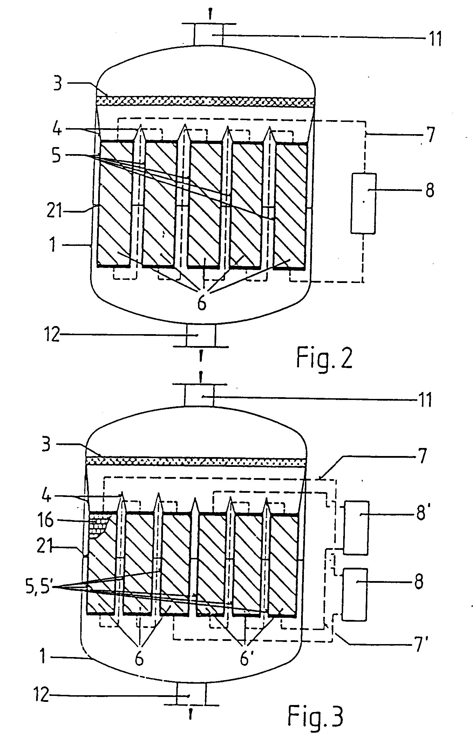

Aus aufgefüllten bzw. aufgeschütteten elektrisch leitenden Füllkörpern (16 bzw. 16' in Fig.3 bzw. Fig. 5) bestehende Packungen der Entgasungskolonne 6 sind in Serie geschaltet und über Anschlüsse 7 an eine Stromquelle 8 schaltbar und elektrisch beheizbar. Im oberen Teil der als Aufheizkolonne ausgebildeten Entgasungskolonne 6 wird das Isolieröl nur leicht erwärmt, so dass eine optimale Entgasung erfolgen kann; im unteren Teil wird das Isolieröl auf eine vorbestimmte Temperatur erhöht, wodurch eine optimale Entwässerung des Oels gewährleistet ist.

Mittels einer Vakuumpumpe 18 werden die aus dem Isolieröl austretenden Luft- und Wasserdampfanteile abgesaugt. Eine Förderpumpe 19, beispielsweise Zentrifugalpumpe, fördert das Isolieröl durch die Leitung -b- aus dem Entgasungskessel 1 über ein weiteres Sperrventil 17 zu einem -nicht dargestellten- Vorratsbehälter bzw. zurück in den Transformator. Der Entgasungsraum 2 wird mittels einer Niveauüberwachung 10 kontrolliert.

Die in den Fig.2,3,4 und 5 gezeigten Aufheiz- und/oder Entgasungskolonnen 6; 6' können darart angeordnet sein, dass diese sowohl vertikal in deren Längsrichtung durchströmt werden (Fig.2 und Fig.3), als auch entsprechend der Darstellung in den Fig.4 und Fig.5 die Aufheiz-und/oder Entgasungskolonnen 6 horizontal angeordnet sind und das Isolieröl durch die Einlassöffnung 11 über das Verteilersystem 3 und Leitelemente 4 den Aufheiz- und/oder Entgasungskolonnen 6 zugeführt und ebenfalls dieselben in vertikaler Richtung durchströmen. Die Aufheiz- und/oder Entgasungskolonne gemäss Fig.4 besteht aus horizontal übereinander angeordneten Teil-Füllkörpersäulen,die elektrisch in Serie geschaltet sind. Die horizontal angeordnete als eine Füllkörpersäule ausgebildete Aufheiz- und/oder Entgasungskolonne 6 gemäss Fig.5 eignet sich für Vorrichtungen kleinerer Leistungen.

Die Füllkörpersäulen können in bekannter Weise als regelmässige Packungen in einem Gehäuse 5,5',5'' mit Füllkörpern 16 aufgefüllt oder als unregelmässige Packungen im Gehäuse 5,5',5'' mit Füllkörpern 16' lose aufgeschüttet sein. Die einzelnen Füllkörper 16 bzw. 16' (in Fig.3 bzw. Fig.5 jeweils angedeutet) können miteinander auch verschweisst sein.

Die mittels Halterungen 21 an der Kesselinnenwand befestigten Aufheiz- und/oder Entgasungskolonnen 6 sind über Anschlüsse 7 elektrisch in Serie geschaltet und an eine Stromquelle 8 elektrisch schaltbar und elektrisch beheizbar ausgebildet. Die elektrische Heizung ist vorzugsweise eine Widerstands-, eine Hochfrequenz- oder eine Mikrowellen-Heizung. Die Aufheiz- und/oder Entgasungskolonnen 6 können auch in zwei oder mehreren Kolonnen-Gruppen 6; 6' aufgeteilt sein, die an die entsprechenden Stromquellen 8, 8' über die Anschlüsse 7, 7' elektrisch stufenweise schaltbar und elektrisch beheizbar sind.

Die Aufheiz- und/oder Entgasungskolonnen 6; 6' weisen eine geometrische Form auf und sind vorzgusweise zylinder- oder prismenförmig ausgebildet, wobei auch Drahtgehäuse vorgesehen werden können. Die Gehäuse-Oberflächen der Aufheiz- und/oder Entgasungskolonnen 6; 6' können zur besseren Entgasung und Entwässerung gelocht sein.

## Patentansprüche

1. Vorrichtung zur Entgasung und Entwässerung von ölartiger oder ölhaltiger Flüssigkeit mit einem teilweise mit Füllkörpern (16') gefüllten Entgasungskessel (1) mit einem unter Vakuum stehenden Entgasungsraum, einem Pumpenanschluss für eine Vakuumeinrichtung (18), einem im Entgasungskessel (1) angeordneten Flüssigkeitsverteiler (3), einer an eine Stromquelle (8) angeschlossenen Heizeinrichtung zur Erwärmung der Flüssigkeit, und einer unterhalb des Flüssigkeitsverteilers (3) angeordneten Entgasungskolonne (6), die von einer in einem Gehäuse (5, 5'') untergebrachten, die Füllkörper (16') aufnehmenden Füllkörpersäule gebildet ist, dadurch gekennzeichnet, dass die Entgasungskolonne (6) als Aufheizkolonne ausgebildet ist, dass die Füllkörper (16') elektrisch leitend sind und die Heizeinrichtung bilden, und dass die Aufheizkolonne derart beheizt ist, dass sich die durchtretende Flüssigkeit im oberen Teil der Aufheizkolonne auf einer die Entgasung gewährleistenden geringen und im unteren Teil der Aufheizkolonne auf einer die Entwässerung gewährleistenden höheren Temperatur befindet (Fig. 1, 4, 5).

2. Vorrichtung nach Anspruch 1, dadurch gekennzeichnet, dass die Füllkörpersäule von mehreren jeweils in einem Gehäuse (5, 5'') untergebrachten Teil-Füllkörpersäulen gebildet ist (Fig. 1, 4).

3. Vorrichtung nach Anspruch 1, dadurch gekennzeichnet, dass die Teil-Füllkörpersäulen horizontal übereinander angeordnet und miteinander elektrisch in Serie geschaltet sind.

4. Vorrichtung nach einem der Ansprüche 1 bis 3, dadurch gekennzeichnet, dass zwischen dem Flüssigkeitsverteiler (3) und der Aufheizkolonne Leitelemente (4) angeordnet sind.

5. Vorrichtung nach einem der Ansprüche 1 bis 4, dadurch gekennzeichnet, dass die einzelnen Füllkörper (16') miteinander verschweisst sind.

6. Vorrichtung zur Entgasung und Entwässerung von ölartiger oder ölhaltiger Flüssigkeit mit einem teilweise mit Füllkörpern (16) gefüllten Entgasungskessel (1) mit einem unter Vakuum stehenden Entgasungsraum, einem Pumpenanschluss für eine Vakuumeinrichtung, einem im Entgasungskessel (1) angeordneten Flüssigkeitsverteiler (3), einer an eine Stromquelle (8, 8') angeschlossenen Heizeinrichtung zur Erwärmung der Flüssigkeit, und mindestens einer unterhalb des Flüssigkeitsverteilers (3) angeordneten Entgasungskolonne (6, 6'), die eine in einem Gehäuse (5, 5') untergebrachte, die Füllkörper (16) aufnehmenden Füllkörpersäule enthält, dadurch gekennzeichnet, dass mehrere Entgasungskolonnen (6, 6') vorgesehen sind, dass jede der Entgasungskolonnen (6, 6') als Aufheizkolonne ausgebildet ist , dass die Füllkörper (16) elektrisch leitend sind und die Heizeinrichtung bilden, und dass jede Aufheizkolonne derart beheizt ist, dass sich die durchtretende Flüssigkeit im oberen Teil der Aufheizkolonne auf einer die Entgasung gewährleistenden geringen und im unteren Teil der Aufheizkolonne auf einer die Entwässerung gewährleistenden höheren Temperatur befindet (Fig. 2, 3).

7. Vorrichtung nach Anspruch 6, dadurch gekennzeichnet, dass die Aufheizkolonnen in mindestens zwei Kolonnengruppen stufenweise an die Stromquelle (8, 8') schaltbar und elektrisch beheizbar sind.

8. Vorrichtung nach Anspruch 7, dadurch gekennzeichnet, dass Aufheizkolonnen elektrisch in Serie geschaltet sind.

9. Vorrichtung nach einem der Ansprüche 6 bis 8, dadurch gekennzeichnet, dass die Aufheizkolonnen vertikal angeordnet sind.

10. Vorrichtung nach einem der Ansprüche 6 bis 9, dadurch gekennzeichnet, dass zwischen dem Flüssigkeitsverteiler (3) und den Aufheizkolonnen Leitelemente (4) angeordnet sind.

11. Vorrichtung nach einem der Ansprüche 6 bis 10, dadurch gekennzeichnet, dass die einzelnen Füllkörper (16) miteinander verschweisst sind.

## Claims

1. Apparatus for degassing and dewatering oil-like or oil-containing liquid, having a degassing vessel (1) which is partially filled with packings (16') and has a degassing space in vacuo, a pump connection for a vacuum means (18), a liquid distributor (3) arranged in the degassing vessel (1), a heating means connected to a current source (8) and intended for heating the liquid, and a degassing column (6) which is arranged below the liquid distributor (3) and is formed by a packed column housed in a housing (5, 5'') and holding the packings (16'), characterized in that the degassing column (6) is in the form of a heating column, that the packings (16') are electrically conductive and form the heating means, and that the heating column is heated in such a way that, in the upper part of the heating column, the liquid passing through is at a low temperature ensuring degassing and, in the lower part of the heating column, said liquid is at a higher temperature ensuring dewatering (Fig. 1, 4, 5).

2. Apparatus according to Claim 1, characterized in that the packed column is formed by several part packed columns each housed in a housing (5, 5'') (Fig. 1, 4).

3. Apparatus according to Claim 1, characterized in that the part packed columns are arranged horizontally one on top of the other and are connected to one another electrically in series.

4. Apparatus according to any of Claims 1 to 3, characterized in that guide elements (4) are arranged between the liquid distributor (3) and the heating column.

5. Apparatus according to any of Claims 1 to 4, characterized in that the individual packings (16') are welded to one another.

6. Apparatus for degassing and dewatering oil-like or oil-containing liquid, having a degassing vessel (1) which is partially filled with packings (16) and has a degassing space in vacuo, a pump connection for a vacuum means, a liquid distributor (3) arranged in the degassing vessel (1), a heating means connected to a current source (8, 8') and intended for heating the liquid, and at least one degassing column (6, 6') which is arranged below the liquid distributor (3) and contains a packed column housed in a housing (5, 5') and holding the packings (16), characterized in that several degassing columns (6, 6') are provided, that each of the degassing columns (6, 6') is in the form of a heating column, that the packings (16) are electrically conductive and form the heating means, and that each heating column is heated in such a way that, in the upper part of the heating column the liquid passing through is at a low temperature ensuring degassing and, in the lower part of the heating column, said liquid is at a higher temperature ensuring dewatering (Fig. 2, 3).

7. Apparatus according to Claim 6, characterized in that the heating columns can be switched in at least two groups of columns stepwise to the current source (8, 8') and can be electrically heated.

8. Apparatus according to Claim 7, characterized in that heating columns are connected electrically in series.

9. Apparatus according to any of Claims 6 to 8, characterized in that the heating columns are arranged vertically.

10. Apparatus according to any of Claims 6 to 9, characterized in that guide elements (4) are arranged between the liquid distributor (3) and the heating columns.

11. Apparatus according to any of Claims 6 to 10, characterized in that the individual packings (16) are welded to one another.

## Revendications

1. Appareil de dégazage et de déshydratation d'un liquide huileux ou contenant de l'huile avec une chaudière de dégazage (1) remplie partiellement de corps de remplissage (16') avec un espace de dégazage qui est sous vide, un raccord de pompe pour un dispositif à vide (18), un distributeur de liquide (3) disposé dans la chaudière de dégazage (1), un dispositif de chauffage connecté à une source de courant (8) pour chauffer le liquide et une colonne de dégazage (6) disposée en dessous du distributeur de liquide (3), qui est formée d'un empilage de corps de remplissage (16') logé dans une enveloppe (5, 5''), caractérisé en ce que la colonne de dégazage (6) est conformée en colonne de chauffage, les corps de remplissage (16') sont conducteurs de l'électricité et forment le dispositif de chauffage et la colonne de chauffage est chauffée, de telle sorte que le liquide passant à travers l'appareil soit, dans la partie supérieure de la colonne de chauffage, à une température peu élevée garantissant le dégazage et, dans la partie inférieure de la colonne de chauffage, à une température plus élevée garantissant la déshydratation (Fig. 1, 4, 5).

2. Dispositif selon la revendication 1, caractérisé en ce que l'empilage de corps de remplissage est formé de plusieurs empilages de corps de remplissage partiels logés respectivement dans une enveloppe (5, 5'') (Fig. 1, 4).

3. Dispositif selon la revendication 1, caractérisé en ce que les empilages de corps de remplissage partiels sont disposés horizontalement l'un au-dessus de l'autre et sont connectés électriquement en série.

4. Dispositif selon l'une quelconque des revendications 1 à 3, caractérisé en ce que des éléments de guidage (4) sont agencés entre le distributeur de liquide (3) et la colonne de chauffage.

5. Dispositif selon l'une quelconque des revendications 1 à 4, caractérisé en ce que les corps de remplissage individuels (16') sont soudés les uns aux autres.

6. Dispositif de dégazage et de déshydratation de liquides huileux ou contenant de l'huile avec une chaudière de dégazage (1) remplie partiellement de corps de remplissage (16) avec un espace de dégazage qui est sous vide, un raccord de pompe pour un dispositif à vide, un distributeur de liquide (3) disposé dans la chaudière de dégazage (1), un dispositif de chauffage connecté à une source de courant (8, 8') pour chauffer le liquide, et au moins une colonne de dégazage (6, 6') disposée en dessous du distributeur de liquide (3), qui contient un empilage de corps de remplissage (16) logé dans une enveloppe (5, 5'), caractérisé en ce que plusieurs colonnes de dégazage (6, 6') sont prévues, chacune des colonnes de dégazage (6, 6') est conformée en colonne de chauffage, les corps de remplissage (16) sont conducteurs de l'électricité et forment le dispositif de chauffage, et chaque colonne de chauffage est chauffée, de telle sorte le liquide passant à travers l'appareil soit, dans la partie supérieure de la colonne de chauffage, à une température peu élevée garantissant le dégazage et, dans la partie inférieure de la colonne de chauffage, à une température plus élevée garantissant la déshydratation (Fig. 2, 3).

7. Dispositif selon la revendication 6, caractérisé en ce que les colonnes de chauffage d'au moins deux groupes de colonnes peuvent être connectées successivement à la source de courant (8, 8') et être chauffées électriquement.

8. Dispositif selon la revendication 7, caractérisé en ce que les colonnes de chauffage sont connectées électriquement en série.

9. Dispositif selon l'une quelconque des revendications 6 à 8, caractérisé en ce que les colonnes de chauffage sont agencées verticalement.

10. Dispositif selon l'une quelconque des revendications 6 à 9, caractérisé en ce que des éléments de guidage (4) sont disposés entre le distributeur de liquide (3) et les colonnes de chauffage.

11. Dispositif selon l'une quelconque des revendications 6 à 10, caractérisé en ce que les corps de remplissage individuels (16) sont soudés les uns aux autres.
